# EUROPEAN PATENT APPLICATION

(11) **EP 2 653 717 A1**
(43) Date of publication of application: **23.10.2013**
(21) Application number: 12164475.1
(22) Date of filing: 17.04.2012
(51) Int. Cl.: F03D 1/06

(54) **Arrangement to retrofit a wind turbine blade**

(71) Applicant: Siemens Aktiengesellschaft, 80333 München (DE)
(72) Inventor: Overgaard, Anders, 9900 Frederikshavn (DK)

(57) **Abstract**

The invention relates to an arrangement to retrofit a blade of a wind turbine. The invention even relates to the blade, which is intended to be retrofitted and to the retrofit unit itself.

According to the invention an arrangement is provided, which comprises a wind turbine blade and a retrofit unit. The blade comprises a seat, which is an integrated part of the blade. The seat is arranged and prepared to be connected with the retrofit unit. The retrofit unit comprises a counterpart, which is arranged and prepared to be connected with the seat of the blade. The retrofit unit and the blade are connected via the seat and the seat-counterpart in a form-fit manner in view to the surface of the blade.

## Description

The invention relates to an arrangement to retrofit a blade of a wind turbine. The invention even relates to the blade, which is intended to be retrofitted and to the retrofit unit itself.

A wind turbine blade shows a typical length of 40 meters or more, while its typical width is 2 meters or more.

Due to these huge dimensions severe problems are caused in view to the transportation of the blade from the blade-production-site to the site, where the wind turbine is planned to be erected.

Sometimes a wind turbine blade needs to be equipped with a retrofit unit. For example a winglet or an extension unit or a set of Gurney flaps or the like may be used as retrofit unit.

The retrofit unit can be used to fulfill or reach specific wind turbine requirements. Thus retrofit units are often used to enable a blade to cope with specific weather conditions at the wind turbine site or the surface or shape of the blade needs to be adjusted in view to a specified output power of the wind turbine.

If the retrofit unit is an integrated part of the blade manufactured the overall dimensions are increased. Additionally the surface of the blade may be changed in a disadvantageous manner in view to the transportation.

It is known to manufacture a blade and its retrofit unit separately. The parts are transported to the wind turbine site and are connected there.

Thus the surface of the blade needs to be prepared at the site to ensure a long term stable connection between the blade and the retrofit unit. For example the surface of the blade needs to be grinded to prepare and enhance a glue-connection.

After the glue-connection is cured the surface, which is close to the connection-area, needs to be polished and painted. Thus this work needs to be done in "good" (dry) weather conditions at a medium temperature in view to the glue used. The retrofit work is time extensive due to these facts.

The retrofit work is even cost expensive as experienced service teams are needed for the retrofitting.

It is therefore the aim of the invention to provide an improved arrangement and method for retrofitting a wind turbine blade enabling an easy, time- and cost-efficient retrofit.
It is even the aim of the invention to provide a specific shaped blade and a specific shaped retrofit unit forming the base for the arrangement addressed above.

This aim is reached by the features of claim 1, claim 10 and by the features of claim 11.

Preferred embodiments of the invention are object of the dependent claims.

According to the invention an arrangement is provided, which comprises a wind turbine blade and a retrofit unit. The blade comprises a seat, which is an integrated part of the blade. The seat is arranged and prepared to be connected with the retrofit unit. The retrofit unit comprises a counterpart, which is arranged and prepared to be connected with the seat of the blade. The retrofit unit and the blade are connected via the seat and the seat-counterpart in a form-fit manner in view to the surface of the blade.

In a preferred configuration the blade is manufactured by using the well known "Vacuum Assisted Resin Transfer Mould, VARTM"-process.

The section of the blade, which is intended to be connected with the retrofit-unit, is shaped and prepared as a seat to interact with the retrofit-unit. This is done as part of the blade-manufacturing process.

The seat is shaped and prepared to interact with the retrofit unit. Thus the retrofit unit comprises a section with a counterpart of the seat.

The seat may be shaped like a projection or nose, which extends from the base-body of the blade. Accordingly the counterpart of the seat is shaped as a groove or cavity, for example.

There is a wide range for interacting shapes of the seat and its counterpart, which is addressed by the invention: the "tongue and groove"-connection or the "dove tail" connection, etc.

The seat and its counterpart are shaped in a way that they are connectable in a form-fit manner in view to the blade surface. Thus the aerodynamic characteristics of the blade are maintained or improved.

In a preferred configuration the seat comprises a cascaded transition zone, which is between the body of the blade and the seat.

In a preferred configuration the cascaded transition zone comprises only one "step" or "stair".

In a preferred configuration the cord length of the body of the blade is longer than the chord length of the transition zone.

In a preferred configuration the cord length of the body of the blade is longer than the chord length of the seat.

The seat of the blade is manufactured together with the blade thus the seat is an integrated part of the manufactured blade afterwards.

For example layers and components of a first half of the blade are placed and arranged on top of a first mould to prepare the VARTM-process.

Accordingly layers and components of a second half of the blade are placed and arranged on top of a second mould.

Both moulds are connected to build up the 3-dimensional shape of the blade, while both moulds even enclose a so called "mould inlay" in a preferred configuration. The first and the second mould are connected to result in a closed mould system.

The mould inlay is shaped as a negative of the seat-shape intended.

In a preferred configuration the mould inlay is divided into a first part, which is placed in the first mould, and into a second part, which is placed in the second mould.

Thus the first part of the mould inlay forms a part of the inner surface of the first mould. Therefore the first part of the inlay is acting as a base and supports the layers being placed on the first mould.

Accordingly the second part of the mould inlay forms a part of the inner surface of the second mould. Therefore the second part of the inlay is acting as a base and supports the layers being placed on the second mould.

The closed mould system is subjected to the VARTM-process thus resin or another matrix material is used to connect the layers of the blade. Due to the negative-shape of the mould inlay the ready-manufactured blade comprises the seat at a specific section of the blade.

In a preferred configuration the seat completely matches with its counterpart of the retrofit-unit.

In a preferred configuration the seat, which is arranged at the blade, and the seat-counterpart, which is arranged at the retrofit-unit, are prepared for a connection with glue. Thus they might comprise a recess, which is used to accommodate surplus-glue being applied to the connection.

The invention allows an optimized mounting of a retrofit unit (i.e. a blade extension or a blade winglet) at a specific position of the blade of a wind turbine and its fixation there. There is no longer the need for time extensive and cost expensive work.

The invention allows an easy and fast retrofitting of the wind turbine blade with a winglet, blade-extension, etc.

The invention provides a specified geometry, which is formed between the seat of the blade and the seat-counterpart of the retrofit unit.
This specific geometry is shaped and arranged in a way that a secured glued-connection without trapped air is provided.

Preferably the thickness of the glued-connection is homogeneous over the complete surface of the geometry.

The use of a seat allows maintaining of a specific geometry with an adequate material thickness at the edges of contact. The invention is shown in more detail by help of figures. The figures show preferred configurations and do not limit the scope of the invention.
- FIG 1: shows a mould inlay, which is used to result in a seat according to the invention, while the seat is arranged at a specific section of the blade,
- FIG 2: shows the ready-manufactured blade with the seat according to the invention in a two sided view,
- FIG 3: shows a detail of FIG 2,
- FIG 4: shows details of the connection of the blade and the retrofit unit, and
- FIG 5: shows a retrofit unit to be connected with the blade according to the invention.

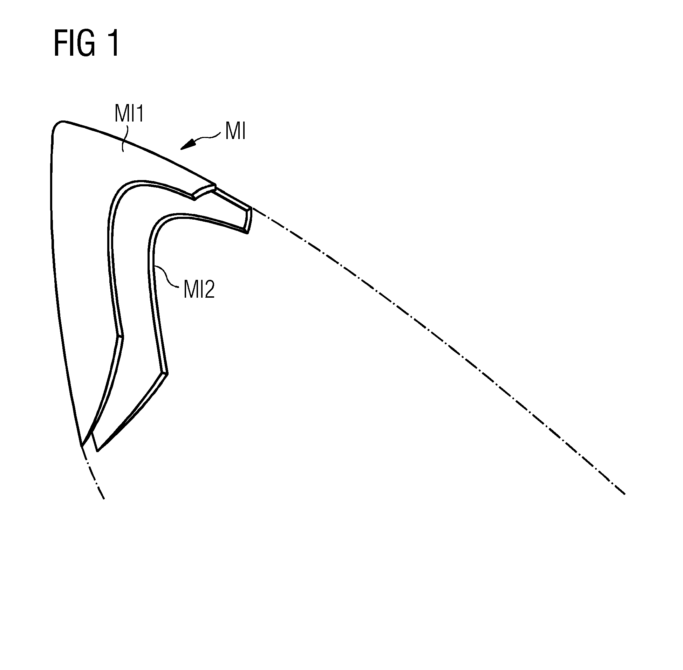

FIG 1 shows a mould inlay MI, which is used to result in a seat according to the invention.

The mould inlay MI is shaped as a negative of the seat-shape intended.

For example the mould inlay MI is intended to be used within a VARTM-blade-manufacturing-process as described above.

In a preferred configuration the mould inlay MI is divided into a first part MI1 and into a second part MI2.

The first part MI1 is intended to be placed in a first mould (not shown here) while the second part MI2 is intended to be placed in a second mould (not shown here) of the VARTM-configuration.

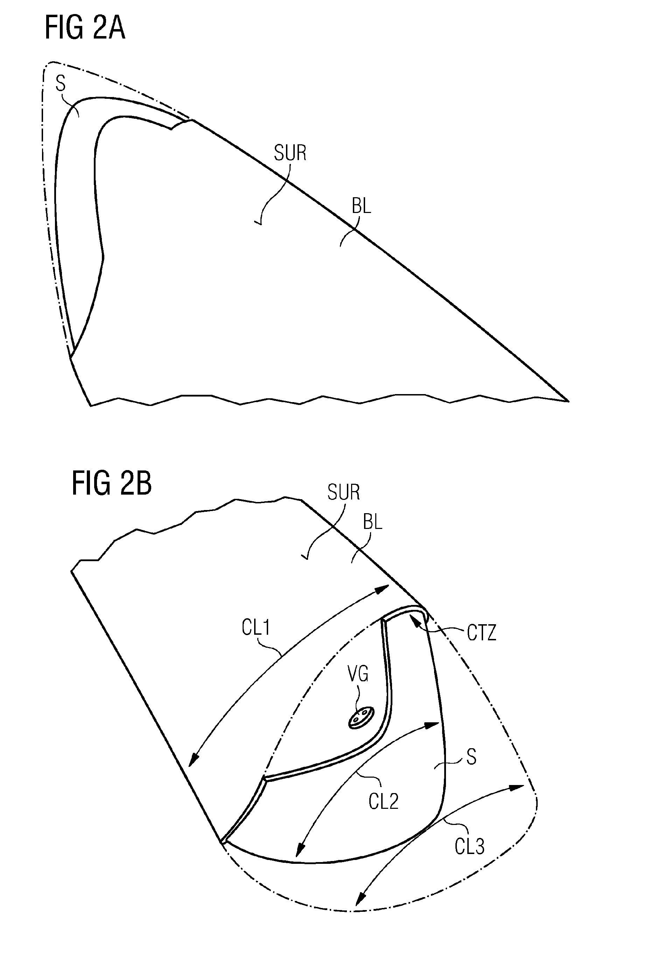

FIG 2A shows a ready-manufactured blade BL in a top view while FIG 2B shows the blade BL in a bottom view.

The blade BL comprises a seat S, which is prepared to interact with a seat-counterpart of a retrofit unit (not shown here).

The dashed lines in FIG 2 refer to the original geometry and profile of the blade BL, especially of the tip end region of the blade BL.

The BL comprises as an integrated part now a projection or a nose extending from the body of the blade BL at its tip end.

The seat S comprises a cascaded transition zone CTZ, while the transition zone CTZ is arranged between the base-body of the blade BL and the seat S.

Thus the cord length CL1 of the base-body of the blade BL is longer than the chord length CL2 of the transition zone CTZ.

Accordingly the cord length CL1 of the base-body of the blade BL is longer than the chord length CL3 of the seat S.

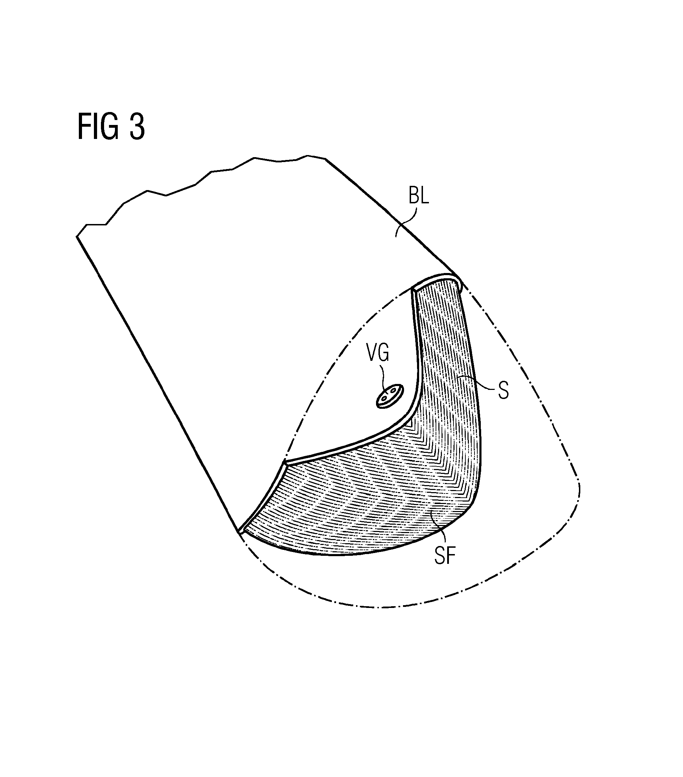

FIG 3 shows a detail of FIG 2, especially of FIG 2B.

The surface SF of the seat S is defined by the mould inlay MI, referring to FIG 1.

The surface SF of the seat S must be ribbed or grooved to improve a planned gluing-connection between the blade BL and the retrofit unit (not shown here).

In a preferred configuration the mould inlay MI comprises a ribbed surface thus the seat S will even show an appropriate ribbed surface SF.

In another configuration the ribbed surface of the mould inlay MI and/or the ribbed surface SF of the seat S can be reached by a toothed spatula which is drawn along the surface SF for example, thus a specific pattern is reached.

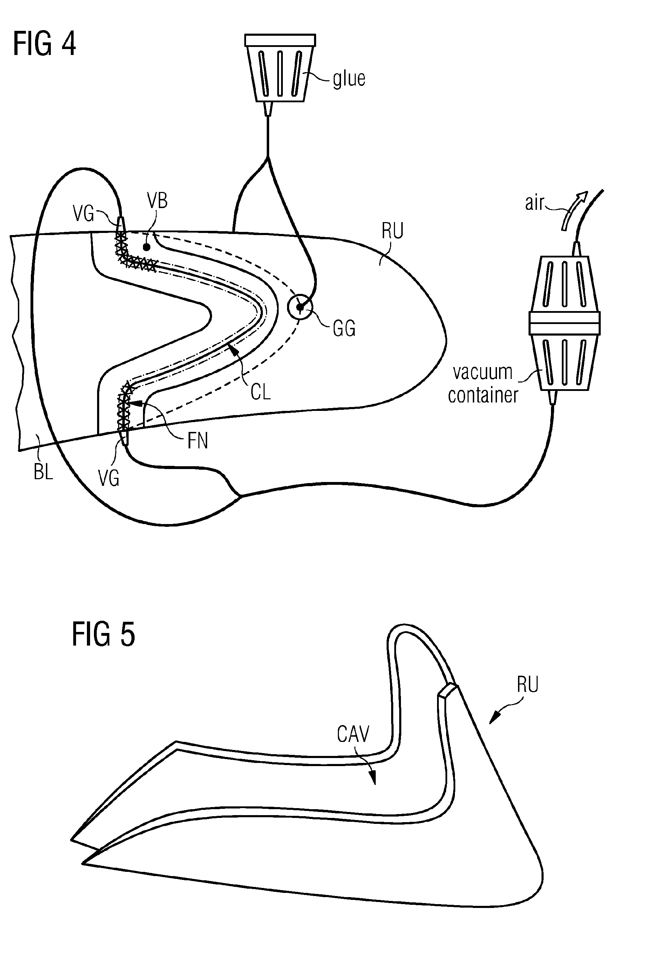

The pattern allows the control of the flow of the glue, which is injected (this is described in more detail by help of FIG 4) .

The pattern results in a homogeneous glue-thickness and even prevents that air is trapped within the area of connection.

FIG 4 shows details of the connection of the blade BL and a retrofit unit RU.

The retrofit unit RU comprises a groove or cavity, which is prepared to interact with the nose of the blade BL. The size of the cavity is chosen in a way that the whole nose is accommodated in the cavity for example.

The retrofit unit RU is slipped over the nose of the blade BL, thus a form-fit connection in view to the surface of the blade BL is achieved.

A technical vacuum or under-pressure is applied between the nose of the blade BL and the cavity of the retrofit unit RU thus the retrofit unit RU is automatically pulled in place in view to the corresponding seat.

While using vacuum for these purpose even glue is sucked in the connection-area between the seat and the cavity.

The glue is injected by using so called "glue-gates" GG which are part of the retrofit unit RU.

The technical vacuum is used to remove the air and to suck the glue towards its position.

The vacuum is applied by using so called "vacuum-gates" VG which are part of the blade BL and which are even shown in FIG 2 and FIG 3.

The dashed line shows the geometry of the seat S inside the retrofit unit RU.

The connection line CL between the retrofit unit RU and the blade BL is covered with a layer of "compoflex".

A feeder-net FN is placed on the top of the blade BL additionally.

The compoflex layer and the feeder net are placed on the leeward side and on the windward side of the blade BL to get an appropriate vacuum along the entire connection line CL, which defines the joint between the blade BL and the retrofit unit RU.

A vacuum bag VB is mounted to cover the whole connection line CL, which is between the blade BL and the retrofit unit RU.

The vacuum bag VB comprises openings, which are connected with the vacuum gates VG, on the leading edge of the blade BL and on the trailing edge of the blade BL.

A hose system, which is connected with the vacuum container, is used to secure room for surplus-glue, which leaves the connection area.
The glue is injected until a predefined volume of glue is filled into the vacuum container via the hose system. This signals that enough glue was injected.

The glue is infused on both sides of the blade BL. For this purpose a hose system with nozzles, being connected with the glue-gate GG, is used.

The glue is sucked into the joint-area between the blade BL and the retrofit unit RU.

The glue is finally sucked in upward direction and reaches the layer of compoflex VL. This compoflex-layer VL limits the flow of the glue thus a minimum finishing work is achieved.

FIG 5 shows a retrofit unit RU, which is prepared to be connected with the blade BL via the seat S of the blade BL.

As shown the retrofit unit RU comprises a cavity CAV which is prepared to accommodate the seat S completely in this case.

## Claims

1. Retrofit-Arrangement comprising a wind turbine blade (BL) and a retrofit unit (RU),
- wherein the blade (BL) comprises a seat (S), which is an integrated part of the blade (BL),
- wherein the seat (S) is arranged and prepared to be connected with the retrofit unit (RU),
- wherein the retrofit unit (RU) comprises a counterpart (CAV), which is arranged and prepared to be connected with the seat (S) of the blade (BL), and
- wherein the retrofit unit (RU) and the blade (BL) are connected via the seat (S) and the seat-counterpart (CAV) in a form-fit manner in view to the surface (SUR) of the blade (BL).

2. Arrangement according to claim 1, wherein the blade (BL) and its integrated seat (S) are manufactured by using the Vacuum Assisted Resin Transfer Mould-process.

3. Arrangement according to claim 1, wherein the seat (S) is a projection or nose, which extends from the base-body of the blade (BL).

4. Arrangement according to claim 3, wherein the seat (S) extends from the tip end of the blade (BL).

5. Arrangement according to claim 3 or claim 4, wherein the seat (S) comprises a cascaded transition zone (CTZ), while the transition zone (CTZ) is arranged between the base-body of the blade (BL) and the seat (S).

6. Arrangement according to claim 5, wherein the cascaded transition zone (CTZ) comprises a single step or tread.

7. Arrangement according to one of the precedent claims,
- wherein the cord length (CL1) of the base-body of the blade (BL) is longer than the chord length (CL2) of the transition zone (CTZ), and/or
- wherein the cord length (CL1) of the base-body of the blade (BL) is longer than the chord length (CL3) of the seat (S).

8. Arrangement according to claim 3, wherein the seat counterpart (CAV) of the retrofit unit (RU) is a groove or a cavity, being prepared to enclose the seat (S) of the blade (BL) at least partly.

9. Arrangement according to claim 1, wherein the seat (S) of the blade (BL) and the counter seat (CAV) of the retrofit unit (RU) are prepared for a tongue and groove connection or for a dove tail connection.

10. Retrofit unit (RU), which is prepared to be connected with a seat (S) of a wind turbine blade (BL),
- while the seat (S) is an integrated part of a wind turbine blade (BL),
- wherein the retrofit unit (RU) comprises a counterpart (CAV), which is arranged and prepared to be connected with the seat (S) of the blade (BL), and
- wherein the retrofit unit (RU) and its counterpart (CAV) are shaped in a way that a form-fit connection is reached between the surface (SUR) of the blade (BL) and the surface of the retrofit unit (RU) if they are connected via the seat (S) of the blade (BL).

11. Wind turbine blade (BL), which is prepared to be connected with a retrofit unit (RU),
- wherein the blade (BL) comprises a seat (S), which is an integrated part of the blade (BL),
- wherein the seat (S) is arranged and prepared to be connected with a counter seat (CAV) of the retrofit unit (RU), and
- wherein the blade (BL) and its seat (S) are shaped in a way that a form-fit connection is reached between the surface (SUR) of the blade and the surface of the retrofit unit (RU) if they are connected via the seat counterpart (CAV) of the retrofit unit (RU).
